# DEMANDE DE BREVET EUROPEEN

(11) **EP 0 971 494 A1**
(43) Date de publication de la demande: **12.01.2000**
(21) Numéro de dépôt: 99401666.5
(22) Date de dépôt: 05.07.1999
(51) Int. Cl.: H04B 10/18, H04B 10/17

(54) **Amplification quasi-distribuée dans une transmission soliton WDM**

(30) Priorité: 06.07.1998 FR 9808625
(71) Demandeur: ALCATEL, 75008 Paris (FR)
(72) Inventeur: Desurvire, Emmanuel, 91680 Bruyères le Châtel (FR)
(74) Mandataire: Lamoureux, Bernard

(57) **Abrégé**

L'invention concerne un système de transmission à fibre optique à signaux solitons et à multiplexage de longueur d'onde; pour réduire les effets de la gigue de collision sur les canaux solitons, elle propose de procéder à une amplification quasi-distribuée, combinant une amplification discrète et une amplification distribuée.

On peut ainsi combiner un pompage (24, 26) d'une fibre de ligne faiblement dopée et une amplification discrète par un EDFA (16) dans les répéteurs (5i). Avantageusement, on utilise des moyens de pompage redondants et communs pour l'amplification discrète et l'amplification distribuée, et on contrôle automatiquement le gain de l'amplification discrète.

## Description

La présente invention a pour objet un système de transmission à fibre optique à multiplexage de longueurs d'onde et à signaux solitons, ainsi qu'un procédé de transmission dans un tel système, qui permettent de réduire les effets de la gigue temporelle.

La transmission d'impulsions solitons ou solitons dans la partie d'une fibre optique à dispersion anormale est un phénomène connu. Les solitons sont des signaux impulsionnels de forme sech². Avec cette forme d'impulsion, la non-linéarité dans la partie correspondante de la fibre compense la dispersion du signal optique. La transmission des solitons est modélisée de façon connue par l'équation de Schrödinger non-linéaire.

Divers effets limitent la transmission de telles impulsions, comme la gigue induite par l'interaction des solitons avec le bruit présent dans le système de transmission, décrite par exemple dans l'article de J. P. Gordon et H. A. Haus, Optical Letters, vol. 11 n° 10 pages 665-667. Cet effet, appelé effet Gordon-Haus ou gigue Gordon-Haus, impose une limite théorique à la qualité ou au débit des transmissions par solitons. Pour arriver à dépasser cette limite, il est possible d'utiliser une modulation synchrone des signaux solitons, à l'aide de modulateurs semi-conducteurs. Il a aussi été proposé des systèmes de filtres guidants glissants, permettant de contrôler la gigue des solitons transmis, voir par exemple EP-A-0 576 208. Il a aussi été proposé, pour assurer la régénération du signal sur la ligne, d'utiliser l'effet Kerr dans des modulateurs synchrones d'amplitude ou de phase, ou encore d'utiliser des absorbants saturables.

Par ailleurs, pour augmenter le débit des systèmes de transmission à fibre optique à signaux solitons, il a aussi été proposé d'utiliser un multiplexage de longueur d'onde (en anglais "wavelength division multiplexing ou WDM).

Dans ce cas, les collisions asymétriques entre les solitons des divers canaux provoquent une gigue temporelle gênante. Cette gigue est inhérente à l'utilisation d'amplificateurs discrets: les solitons des différents canaux du multiplex n'interagissent pas de la même façon à faible puissance - avant amplification - ou à fortes puissances après amplification-. Cette gigue temporelle existe tant pour les systèmes passifs, comme les filtres guidants, que pour les systèmes actifs, par exemple à régénération synchrone.

Ce problème est exposé dans A. F. Evan et J. V. Wright, Constraints on the design of single channel high capacity (> 10 Gbit/s) solitons systems, IEEE Photonics Technology Letters, vol. 7 n°1, p. 117 (1995); cet article expose que le problème de la gigue Gordon Haus est le facteur limitant pour des systèmes transocéaniques utilisant des solitons à 10 Gbit/s; toutefois, pour des transmissions à plus haut débit, la distance de transmission ou la distance entre les amplificateurs sont limitées par les perturbations induites par l'amplification discrète. Cet article suggère l'utilisation de fibre à dispersion décroissante, ou d'amplification optique distribuée, qui pourraient localement compenser la dispersion et les non-linéarités de la fibre.

Un premier type de solution proposée consiste à corriger les pertes dans la fibre par une gestion appropriée de la dispersion. D.J. Richardson et al., Periodically amplified system based on loss compensating dispersion decreasing fiber, Eledronics Letters, vol. 32 n° 4, p. 373 (1996) propose une configuration expérimentale d'une boucle à recirculation, utilisant comme fibre de ligne des fibres dont le profil de dispersion suit le profil de pertes. L'utilisation de fibre de ligne dont le profil de dispersion décroît exponentiellement entre les amplificateurs permet dans ce montage d'atteindre des distances de transmission de l'ordre de 266 km; le montage reste néanmoins limité par la gigue temporelle.

Un article de L. F. Mollenauer, et al., Wavelength Division Multiplexing with Solitons in Ultra long Distance Transmissions using Lumped Amplifiers, Journal of Lightwave Technology, vol. 9 no 3, pages 362-367 (1991) décrit le problème des collisions entre solitons dans les systèmes de transmission à mutiplexage de longueur d'onde, et insiste notamment sur les variations de vitesse de propagation induites par les collisions; cet article explique que des variations de la dispersion chromatique de la fibre le long du chemin de transmission peuvent compenser les effets des collisions; il est en conséquence proposé d'utiliser des segments de dispersion différente, pour compenser les effets des collisions sur la vitesse de propagation des solitons.

Un article de A. Hasegawa, S. Kumar et Y. Kodoma, Reduction of Collision-induced time-jitter in Dispersion-managed Solitons Transmission Systems, Optics Letters, vol. 21 no 1, Janvier 1996, pages 39-41 propose un schéma de gestion des dispersion dans la fibre, permettant d'augmenter la distance entre les amplificateurs. Cette solution repose sur un profil de dispersion par paliers dans la fibre approchant autant que possible un profil idéal exponentiel.

Ces solutions restent difficiles à mettre en oeuvre industriellement: il est nécessaire de produire de grandes quantités de fibre présentant un profil de dispersion spécifique, de concaténer des segments de 20 km, et de prévoir des épissures avec d'autres composants. La solution consistant à approximer le profil de dispersion exponentiel par des paliers de dispersion constante est soumise, du point de vue de la production, aux mêmes contraintes de gestion et d'assemblage des segments; en outre, les tolérances acceptables sur la dispersion et la longueur des segment diminuent rapidement lorsque le nombre de palier décroît.

Un autre type de solution consiste à utiliser une amplification distribuée le long de la fibre.

L. F. Mollenauer et al., Soliton propagation in long fibers with periodically compensated loss, IEEE Journal of Quantum Eledronics, vol. QE-22 n° 1, p. 157 (1986) décrit une simulation numérique d'un système de transmission dans lequel les pertes sont périodiquement compensées par le gain Raman. A cet effet, cet article propose d'injecter périodiquement - tous les 50 km - une pompe dans la fibre de ligne, la différence entre la longueur d'onde des solitons et la longueur d'onde de la pompe étant choisi pour correspondre au pic de gain Raman dans la fibre. L'effet de la collision entre deux solitons d'un multiplex en longueur d'onde est aussi étudié, de sorte à montrer la possibilité théorique d'une transmission en multiplex de longueur d'onde, malgré les effets des collisions sur les solitons.

A. Hagesawa, Amplification and reshaping of optical solitons in a glass fiber - IV: use of the stimulated Raman process, Optics Letters, vol. 8 n° 12, p. 650 (1983) ne décrit pas le problème de l'asymétrie des collisions entre solitons de canaux voisins, cet article propose un système de transmission monocanal utilisant une amplification distribuée par effet Raman stimulé; dans l'exemple, des puissances de l'ordre de 70 mW sont injectées tous les 43 km.

J. R. Simpson et al., A distributed Erbium doped fiber amplifier, Proc. Conference on Optical Communications, OFC'90, paper PD19 (1990) ne décrit pas non plus le problème, mais propose un procédé de fabrication d'une fibre pour un amplificateur distribué à fibre dopée à l'erbium; les concentrations en erbium obtenues sont suffisamment faibles pour permettre une amplification distribuée le long de la fibre de ligne.

De même, S. T. Davey et al., Lossless transmission over 10 km of erbium-doped fiber using only 15 mW pump power, Electronics Letters vol. 26 n° 2, p. 1148 (1990) propose une autre méthode de fabrication d'une fibre pour un amplificateur distribué à fibre dopée à l'erbium. Cet article mentionne l'application à des systèmes solitons, mais pas le problème d'asymétrie des collisions.

Un tel type d'amplification distribuée pose des problèmes; pour ce qui est de l'effet Raman stimulé, des puissances de pompe importantes sont nécessaires; des puissances typiques sont de l'ordre de 300 mW à des longueurs d'onde de 1,45 mm, pour des segments de 30 km, et un pompage dans les deux directions. Même si de telles puissances sont techniquement réalisables, la puissance nécessaire comme la fiabilité excluent en pratique cette solution. Les systèmes d'amplification distribuée à fibre dopée à l'erbium présente un bruit élevé par rapport des amplificateurs discrets: on atteint des niveaux de bruits typiques de 7 à 9 dB pour un segment de 50 km, par rapport à des valeurs de l'ordre de 4,5 dB pour un segment de même longueur dans le cas d'une amplification discrète; il s'avère en outre que la puissance de pompe nécessaire pour assurer la transparence de la liaison est assez élevée, et est typiquement de 100 mW, ou plus exactement de 50 mW dans chaque direction, à 1,48 mm..

Enfin, il a aussi été proposé d'utiliser des amplificateurs très proches. L'article précité de L. F. Mollenauer et al. dans le Journal of Lightwave Technology, montre aussi que des solitons de différentes longueurs d'ondes sont transparents les uns pour les autres dans un système de transmission à amplification discrète, si la longueur de la collision, i. e. la distance que parcourent les solitons le long de la fibre lorsqu'ils se traversent - est grande devant l'espacement des amplificateurs. Il est proposé dans cet article d'utiliser des amplificateurs discrets distants de 20 km. Cette solution est économiquement difficile à mettre en oeuvre.

Pour la transmission en multiplexage de longueurs d'ondes, un article de E. Desurvire, O. Leclerc et O. Audouin, Optics Letters, vol. 21, n° 14, pages 1026-1028 décrit un schéma d'allocation des longueurs d'ondes, qui soit compatible avec l'utilisation de modulateurs synchrones. Cet article propose d'allouer des longueurs d'ondes aux différents canaux du multiplex de telle sorte que, pour des intervalles Z_{R} donnés entre les répéteurs, les signaux des différents canaux, ou plus exactement les temps bits des différents canaux du multiplex soient sensiblement synchronisés en arrivant aux répéteurs. On permet ainsi une modulation synchrone en ligne de tous les canaux, à des intervalles donnés, à l'aide de modulateurs synchrones discrets. Cette technique d'allocation des longueurs d'ondes du multiplex est aussi décrite dans la demande de brevet français 9600732 du 23 janvier 1996 au nom de Alcatel Submarine Networks. Dans cet article, il est proposé de choisir un sous groupe de canaux, synchrones non seulement à des intervalles Z_{R}, mais aussi à des intervalles sous multiples de Z_{R}. D'autres aspects de cette technique d'allocation de longueur d'ondes sont décrits dans les articles de O. Leclerc, E. Desurvire et O. Audouin, Synchronous WDM Soliton Regeneration : Toward 80-160 Gbit/s Transoceanic Systems, Optical Fiber Technology, 3 pages 97-116 (1997) et de E. Desurvire et al., Transoceanic Regenerated Soliton Systems: Designs for over 100 Gbit/s Capacities, Suboptic '97, pages 438-447.

Il convient de noter que les solutions au problème de la gigue dues aux collisions asymétriques, proposées dans les articles précités ne sont pas nécessairement compatibles avec ce type de schéma d'allocation des longueurs d'onde; la gestion de la dispersion de la fibre perturberait la synchronicité des temps bit aux régénérateurs synchrones.

Dans le cas d'un système de transmission à signaux solitons monocanal, un pas d'amplification important, typiquement supérieur à Z₀/5 provoque la génération de continuum ou d'ondes dispersives; Z₀ dans ce cas est la longueur d'onde des solitons.

L'invention a pour objet une solution au problème de l'asymétrie des collisions entre solitons dans un système de transmission à multiplexage de longueurs d'onde; elle évite de devoir faire varier le profil de dispersion de la fibre de transmission le long du système de transmission. L'invention propose une solution simple, qui limite la gigue temporelle due aux collisions entre solitons.

Pour un système monocanal, l'invention propose une solution qui permet d'augmenter le pas d'amplification, ou plus précisément la distance entre les amplificateurs discrets. Elle permet d'atteindre des pas d'amplifications de l'ordre de Z₀, typiquement entre 0,8.Z₀ et 1,5.Z₀, sans pour autant provoquer de continuum ou ondes dispersives.

Plus précisément, l'invention propose un système de transmission à fibre optique et à signaux solitons, comprenant une pluralité de sections de fibre et de répéteurs, caractérisé en ce qu'au moins une section de fibre comprend des moyens d'amplification distribuée, et au moins un répéteur comprend des moyens d'amplification discrète.

Dans un mode de réalisation, le système de transmission est un système de transmission à multiplexage de longueurs d'onde

Avantageusement, ladite section de fibre est adjacente au dit répéteur.

De préférence, les moyens d'amplification distribuée comprennent une fibre de ligne faiblement dopée à l'erbium et des moyens de pompage de cette fibre.

Dans un mode de réalisation, les moyens d'amplification comprennent des moyens de pompage par effet Raman stimulé de la fibre de ligne.

Dans un autre mode de réalisation, les moyens d'amplification discrète comprennent un amplificateur à fibre fortement dopée à l'erbium, et des moyens de pompage de cette fibre.

De préférence, les moyens de pompage sont redondants.

On peut aussi prévoir que les moyens de pompage pour les moyens d'amplification discrète et les moyens de pompage pour l'amplification distribuée sont communs.

Dans un mode de réalisation, le système présente des moyens de contrôle automatique du gain des moyens d'amplification discrète.

Ces moyens de contrôle peuvent commander le gain des moyens d'amplification discrète en fonction de la puissance des signaux émis et reçus par le répéteur.

On peut encore prévoir des moyens de contrôle automatique du gain relatif des moyens d'amplification discrète et des moyens d'amplification discrète.

L'invention propose aussi un procédé de transmission de signaux solitons, comprenant :
- au moins une étape d'amplification discrète des signaux, et
- au moins une étape d'amplification distribuée des signaux.

Avantageusement, les signaux solitons sont multiplexés en longueurs d'onde

Dans un mode de mise en oeuvre, l'étape d'amplification discrète comprend le contrôle automatique du gain d'amplification discrète.

On peut prévoir une étape de contrôle de gain relatif de l'amplification discrète et de l'amplification distribuée.

L'invention concerne aussi l'application d'un tel procédé à la réduction de la gigue de collision.

Elle concerne enfin un répéteur pour un système de transmission à fibre optique et à signaux solitons, comprenant des moyens d'amplification discrète des signaux et des moyens de pompage pour une amplification distribuée.

Le répéteur peut être prévu pour un système de transmission à multiplexage de longueurs d'onde

Avantageusement, les moyens de pompage comprennent au moins une pompe pour fibre faiblement dopée à l'erbium.

Ils peuvent aussi comprendre au moins une pompe pour pompage par effet Raman stimulé d'une la fibre de ligne.

De préférence, les moyens d'amplification discrète comprennent un amplificateur à fibre fortement dopée à l'erbium, et des moyens de pompage de cette fibre.

Dans un mode de réalisation, les moyens de pompage sont redondants.

Avantageusement, les moyens de pompage pour les moyens d'amplification discrète et les moyens de pompage pour l'amplification distribuée sont communs.

D'autres caractéristiques et avantages de l'invention apparaîtront à la lecture de la description qui suit de modes de réalisation de l'invention, donnée à titre d'exemple et en référence aux dessins annexés qui montrent:
- figure 1 un schéma de principe d'un système de transmission à signaux solitons et à multiplexage de longueurs d'onde';
- figure 2, un schéma de principe d'un premier mode de réalisation d'un répéteur selon l'invention;
- figure 3, un graphe de l'évolution de la puissance en fonction de la distance, dans le cas d'une amplification distribuée bidirectionnelle;
- figure 4, un graphe de l'évolution de la puissance en fonction de la distance, dans le cas d'une amplification distribuée dans la direction opposée à la direction de propagation;
- figure 5, un graphe de l'évolution de la puissance en fonction de la distance, dans le cas d'une amplification distribuée dans la direction de propagation;
- figure 6, un schéma de principe d'un autre mode de réalisation d'un répéteur selon l'invention;
- figure 7 un schéma de principe d'un multiplexeur du répéteur de la figure 6;
- figures 8 et 9, des schémas de principe de répéteur selon l'invention;
- figures 10 à 12, des schémas de principe de répéteurs selon l'invention, adaptés à des liaisons bidirectionnnelles.

L'invention s'applique à un système de transmission à fibre optique à signaux solitons, et à multiplexage de longueur d'onde ou monocanal. Elle est décrite dans la suite en référence à un système en multiplex de longueur d'onde dans lequel les différentes longueurs d'onde du multiplex sont choisies de sorte à assurer, sur un intervalle donné, un glissement relatif entre les différents canaux sensiblement égal à un multiple du temps bit. Toutefois, elle n'est pas limitée à un système de transmission mettant en oeuvre un tel schéma d'allocation des fréquences, et s'applique plus généralement à tout système de transmission à signaux solitons à multiplexage de longueurs d'onde.

Dans l'exemple proposé, on peut utiliser les solutions d'allocation de longueurs d'onde décrits dans les articles de E. Desurvire et O. Leclerc mentionnés plus haut. Ces articles sont incorporés par référence à la présente description, en ce qui concerne les schémas d'allocation de longueur d'ondes. Un tel schéma d'allocation de longueurs d'ondes assure, à intervalles réguliers Z_{R} le long de la fibre, un glissement relatif entre les différents canaux sensiblement égal à un multiple du temps bit.

Comme exposé plus haut, un problème rencontré dans un système de transmission à multiplexage de longueurs d'onde, et en particulier dans un système avec un tel schéma d'allocation des longueurs d'ondes, est que les collisions entre les signaux solitons dans les amplificateurs ou plus généralement dans tout dispositif asymétrique du système, induisent une variation de la fréquence des solitons; cette variation se traduit par une gigue temporelle à l'arrivée; le signe de la variation de fréquence dépend de la position spectrale relative des signaux solitons subissant la collision.

L'invention propose, pour limiter cette gigue, de prévoir dans le système de transmission une amplification quasi-distribuée, i.e. de combiner des amplificateurs discrets et des amplificateurs distribués. La présence des amplificateurs distribués permet de limiter le degré d'asymétrie induit par les amplificateurs discrets dans les collisions entre solitons de canaux voisins, et limite en conséquence la gigue temporelle; la présence des amplificateurs discrets permet d'éviter les problèmes de puissance de pompe et de bruit que posent les solutions connues ne comprenant que des amplificateurs distribués. En outre, la présence d'amplificateurs discret permet un meilleur contrôle du gain sur un tronçon du système de transmission, permet la compensation de non-platitude de gain et des effets de saturation dans les applications WDM.

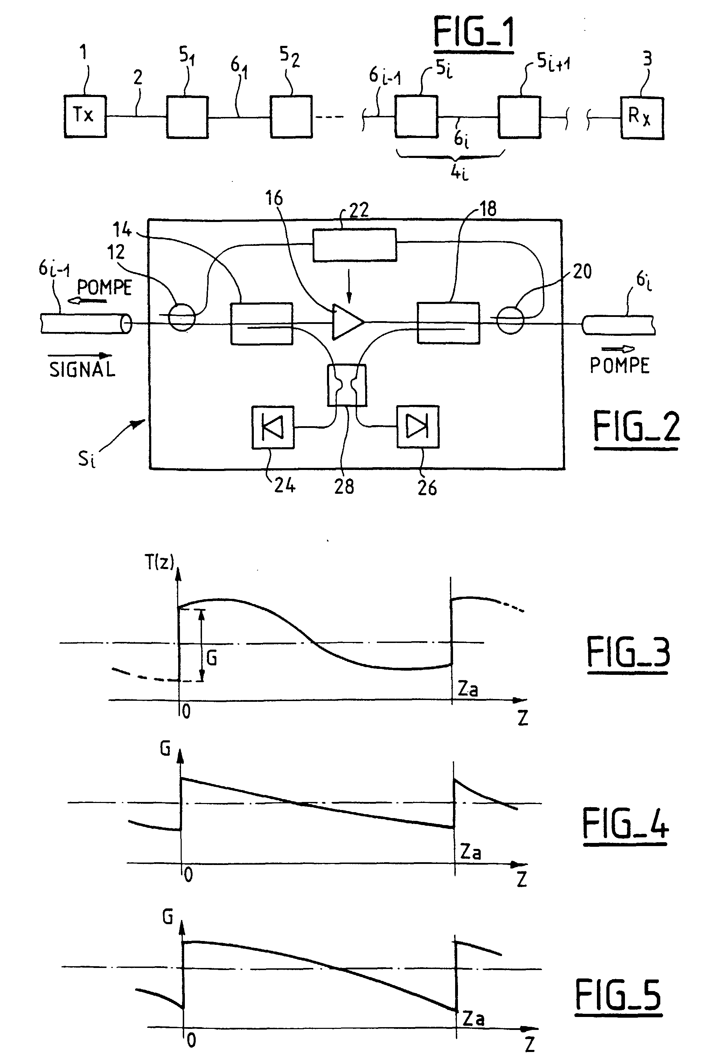

La figure 1 montre un schéma de principe d'un système de transmission à signaux solitons et à multiplexage de longueur d'ondes. Le système comprend un émetteur Tx 1, envoyant des signaux dans une première fibre de ligne 2, et un récepteur Rx 3. Entre la fin de la première fibre de ligne 2 et le récepteur 3 sont prévus une pluralité de sections ou tronçons 4ᵢ, i étant un nombre entier. Chaque tronçon comprend un répéteur 5ᵢ, et de la fibre de ligne 6ᵢ. Le répéteur 5ᵢ d'un tronçon 4ᵢ permet d'amplifier les signaux qu'il reçoit de la fibre de ligne 6ᵢ₋₁ du tronçon précédent et transmet les signaux amplifiés sur la fibre de ligne 6ᵢ de son tronçon. De façon connue en soi, le système de transmission peut comprendre des filtres, par exemple des filtres guidant ou autres, ainsi que des isolateurs ou d'autres composants, qui ne sont pas décrits ici.

Les figures 2, 6 et 8 à 12 montrent des exemples de répéteurs qui peuvent être utilisé dans un système de transmission selon l'invention. Dans chacun des modes de réalisation décrits en référence à ces figures, il est prévu une amplification discrète, en combinaison avec une amplification distribuée. De manière préférée, l'amplification distribuée représente au moins 10% de l'amplification totale, et, de manière plus préférée, au moins 30%.

La figure 2 montre un premier mode de réalisation d'un répéteur selon l'invention. Dans le mode de réalisation de cette figure, on utilise une amplification distribuée dans le sens de transmission des signaux, et aussi dans le sens contraire, ainsi qu'une amplification discrète au niveau du répéteur. On a représenté sur la figure un répéteur 5ᵢ, la fibre de ligne 6ᵢ₋₁ du tronçon précédent, et la fibre de ligne 6ᵢ à travers laquelle le répéteur transmet ses signaux.

Le long de la fibre, dans le sens de transmission des signaux, le répéteur 5i comprend un coupleur 12 - par exemple un coupleur 95/5 - agissant comme échantillonneur de puissance et permettant de prélever une partie des signaux reçus de la fibre 6_{i-1,} pour le contrôle du gain, comme expliqué plus loin; il comprend ensuite un multiplexeur 14 pour injecter dans la fibre de ligne 6ᵢ₋₁ un signal de pompe, dans une direction opposée à la direction de propagation des solitons; il comprend ensuite un amplificateur discret 16, puis un multiplexeur 18 pour injecter dans la fibre de ligne 6ᵢ un signal de pompe, dans la direction de propagation des solitons; il comprend enfin, avant la fibre de ligne 6ᵢ, un coupleur 20 permettant de prélever une partie des signaux transmis sur la fibre de ligne 6ᵢ; comme le coupleur 12, le coupleur 20 peut être un coupleur 95/5, et il est aussi utilisé comme expliqué dans la suite, pour le contrôle du gain. Les multiplexeurs 14 et 18 sont des coupleurs dits WDM, dans lesquels la pompe est couplée à 100% dans la ligne de transmission - dans la direction inverse du signal pour le coupleur 14 ou dans la direction du signal pour le coupleur 18.

Le répéteur 5ᵢ comprend des moyens de contrôle 22; ces moyens de contrôle reçoivent les signaux de contrôle prélevés par les coupleurs 12 et 20, et commandent le gain de l'amplificateur discret 16 en fonction des signaux reçus, comme expliqué plus bas.

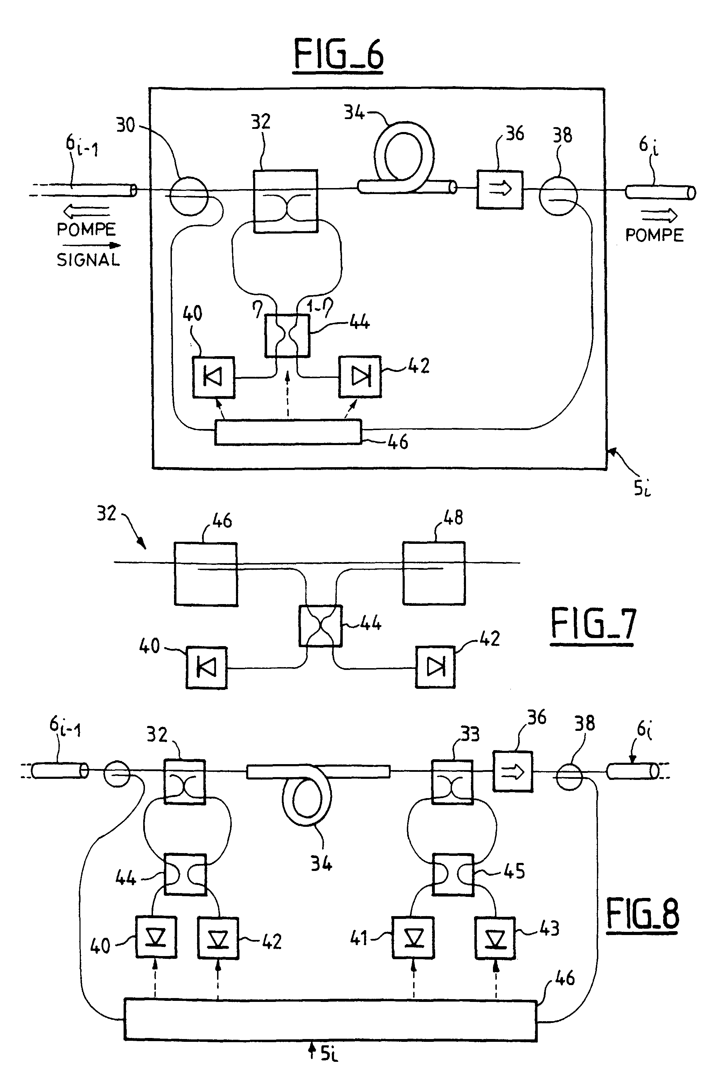

Le répéteur comprend en outre des moyens de pompage, pour générer les signaux de pompage pour les multiplexeurs 14 et 18. Ces moyens de pompage comprennent par exemple des diodes, dont la puissance et la longueur d'onde sont adaptées au type d'amplification distribuée mise en oeuvre. Les pompes peuvent être des diodes à laser semiconducteur, ou des lasers à fibres pompés par diode. La puissance des moyens de pompage peut aussi être commandée par les moyens de contrôle 22, comme c'est le cas dans les modes de réalisation des figures 6 et suivantes.

On notera que les mots "faiblement dopée" ou "fortement dopée", dans le contexte de l'amplification dans des fibres de signaux optiques sont parfaitement clairs pour l'homme du métier, et correspondent à une réalité technique. Les concentrations s'expriment typiquement en dB/m ou en dB/km d'absorption due au dopant, ainsi qu'en ppm, % en masse, mol % ou autres. Ces différentes définitions sont équivalentes pour l'homme du métier. Des fibres faiblement dopées, par exemple à des concentrations de l'ordre de 1 à 10 dB/km permettent un amplification distribuée, par exemple dans la fibre de ligne, sur des distances supérieures à quelques km ou plus. Des fibres fortement dopées, par exemple à des concentrations de l'ordre de 1 à 10 dB/m, permettent une amplification sur une longueur de fibre de quelques mètres ou dizaines. Dans le même registre, l'homme du métier comprend clairement la distinction entre "amplification discrète" et "amplification distribuée". On parle généralement d'amplification discrète lorsque la fibre amplificatrice est localisée dans un répéteur, enroulée sur une bobine et ne participe pas à la longueur de la liaison. On parle en revanche d'amplification distribuée lorsque le gain d'amplification est apporté sur une portion de la fibre faisant partie du câble de transmission.

Dans le mode de réalisation de la figure 2, on a prévu comme moyen de pompage deux diodes 24 et 26 dont les sorties respectives sont reliées aux multiplexeurs 14 et 18 à travers un coupleur 28 à 3 dB ou coupleur 50/50. Ce montage est redondant et permet d'assurer un pompage dans les deux directions, même si l'une des deux diodes est défaillante.

Le fonctionnement du dispositif de la figure 2 est maintenant expliqué en référence à la figure 3; celle-ci montre en ordonnée le rapport entre la puissance P d'un soliton et la puissance moyenne P_{moy}, en fonction de la distance de propagation z. Les répéteurs sont situés à des distances kZₐ, k entier; la figure 3 correspond au cas d'une amplification distribuée bidirectionnelle. Entre deux répéteurs, comme représenté sur la figure, le rapport de la puissance à la puissance moyenne présente d'abord, après un répéteur, une convexité dirigée vers le bas, du fait de l'amplification distribuée dans la direction de propagation: le rapport présente ensuite, avant le répéteur suivant, une convexité dirigée vers le haut, du fait de l'amplification distribuée dans la direction inverse de la direction de propagation. La variation de puissance dans le répéteur à l'abscisse (k-1)Zₐ - symbolisée par la flèche G sur la figure 3 - montre le gain de l'amplificateur discrète dans le répéteur.

L'invention, grâce à cette amplification discrète, permet un contrôle du gain dans le répéteur, en fonction des puissances de consigne. Ainsi, si la puissance reçue en entrée du répéteur 5ᵢ est trop faible, le gain G de l'amplificateur discret du répéteur peut être augmenté pour assurer en sortie du répéteur la puissance de consigne. Une puissance trop faible en entrée peut provenir par exemple de pertes plus importantes que prévu dans la fibre 6_{i-1;} elle peut aussi être le fait d'une puissance de pompe trop faible dans la direction opposée à la direction de propagation des signaux, par exemple si l'une des pompes d'un montage redondant est défaillante. Inversement, si la puissance reçue en entrée du répéteur 5ᵢ est plus importante que la valeur de consigne, le gain G de l'amplificateur discret du répéteur peut être diminué pour assurer en sortie du répéteur la puissance de consigne. On notera que l'on peut prélever à l'aide des coupleurs 12 et 20 la puissance totale sur tous les canaux, ou encore la puissance d'un canal de référence; ne sont pas représentés à la figure 2 ni sur les figures suivantes d'éventuels moyens de filtrage permettant de sélectionner les signaux correspondants. La position des coupleurs 12, 20 prélevant les signaux est à choisir en fonction des possibilités d'extinction de la pompe, et on pourrait notamment placer le coupleur 20 de la figure 2 en amont du coupleur 18 qui injecte la pompe, i.e. à gauche de ce coupleur sur la figure 2. La position du coupleur 12 par rapport au coupleur 14 est indifférente au vu des directions des signaux et de la pompe.

Dans ce mode de fonctionnement, on commande le gain de l'amplificateur discret. Ceci présente l'avantage d'une rétroaction simple à partir des puissances reçues et transmises. On pourrait aussi en outre commander la puissance de la pompe ou des pompes utilisées pour l'amplification distribuée; cette solution ne permet pas de disposer d'une rétroaction, mais peut être intéressante par exemple pour compenser le vieillissement de la liaison ou pour compenser une erreur systématique.

La figure 4 montre une figure analogue la figure 3, dans le cas d'une amplification distribuée dans la direction opposée à la direction de propagation des solitons, couplée à une amplification discrète. Un répéteur pour un tel type d'amplification est obtenu simplement à partir du répéteur de la figure 2, en supprimant le multiplexeur 18. Le fait de garder la même configuration de pompes qu'à la figure 2 a l'avantage de la redondance, mais n'est pas une obligation. On voit sur la figure que la courbe du rapport de la puissance et de la puissance moyenne présente, entre deux répéteurs une convexité dirigée vers le haut. Comme sur la figure 3, la variation de puissance dans le répéteur, du fait de l'amplification discrète, permet de compenser les variations de puissance par rapport à la puissance prévue.

La figure 5 est analogue à la figure 4, mais représente le cas d'une amplification distribuée dans la direction de propagation des solitons, toujours couplée à une amplification discrète. Un répéteur pour un tel type d'amplification est obtenu simplement à partir du répéteur de la figure 2, en supprimant le multiplexeur 14. La courbe du rapport de la puissance et de la puissance moyenne présente, entre deux répéteurs, une convexité dirigée vers le bas. Comme sur les figures 3 et 4, la variation de puissance dans le répéteur, du fait de l'amplification discrète, permet de compenser les variations de puissance par rapport à la puissance théorique.

Dans ces trois configurations, l'invention permet un contrôle automatique du gain, par simple mesure des puissances des signaux reçus et rétroaction sur le gain de l'amplificateur discret; elle permet une adaptation du gain, pour tenir compte des pertes induites par les différents composants de ligne. Par rapport à une solution purement distribuée, l'invention permet un contrôle du gain simple et efficace, au niveau du répéteur. Par rapport à une solution purement discrète, l'invention limite la gigue temporelle due à l'asymétrie des collisions; de fait, l'amplification discrète dans le répéteur est moins importante.

La figure 6 montre un autre mode de réalisation d'un répéteur selon l'invention. Le répéteur de la figure 6 est similaire à celui de la figure 2, en ce qu'il utilise une amplification distribuée dans la direction de propagation de signaux et dans la direction opposée à la direction de propagation des signaux. Le répéteur de la figure 2 utilise en revanche des moyens de pompage commun pour l'amplification distribuée et pour l'amplification discrète. La figure 6 montre, dans la direction de propagation des signaux:
une section de fibre de ligne 6ᵢ₋₁ formant un amplificateur distribué, par exemple de la fibre faiblement dopée à l'erbium; l'extrémité de cette fibre est reliée au répéteur 5ᵢ;
un coupleur 30 pour prélever une partie des signaux reçus en entrée par le répéteur;
un multiplexeur 32 pour l'injection des signaux de pompage, dans la direction opposée à la direction de propagation des signaux comme dans la direction de propagation; une vue plus précise de ce multiplexeur se trouve à la figure 7;
une section de fibre dopée à l'erbium, formant un amplificateur discret 34;
un isolateur 36;
un coupleur 38 pour prélever une partie des signaux fournis en sortie par le répéteur;
les signaux étant ensuite transmis vers la fibre de ligne 6ᵢ, qui forme aussi une amplificateur distribué.

Les moyens de pompage du montage de la figure 2 comprennent deux pompes 40 et 42, par exemple des diodes laser. Les signaux fournis aux sorties respectives des pompes sont fourni au multiplexeur 32 à travers un coupleur 44 d'un rapport de transmission h/1-h. La valeur du coefficient h et/ou les valeurs respectives des puissances de sortie des pompes 40 et 42 sont commandées par des moyens de commande 46 recevant les signaux prélevés en entrée et en sortie du répéteur. Comme dans le montage de la figure 2, on assure un contrôle de la puissance utilisée pour l'amplification distribuée et pour l'amplification discrète. Dans le montage de la figure 6, en notant P₁ la puissance fournie par la pompe 40 et P₂ la puissance fournie par la pompe 42, on détermine facilement que la puissance de pompage dans la direction opposée à la direction de propagation des signaux est de h.P₁ +(1-h).P₂, tandis que la puissance de pompage dans la direction de propagation des signaux est de h.P₂+(1-h).P₁. Il est clair que le signal de pompage utilisé dans la direction de propagation des signaux assure, le cas échéant et en fonction de la puissance résiduelle disponible, à la fois l'amplification dans l'amplificateur discret, et l'amplification dans la fibre de ligne 6ᵢ en aval du répéteur; ceci conduit en fait à ce que la fibre entre les répéteurs soit essentiellement pompée dans la direction opposée à la direction de propagation. Le montage de la figure 6 est avantageux notamment dans le cas où l'on utilise le même type d'amplification dans ces deux amplificateurs. Il conduit à une variation de puissance du type de celle représentée à la figure 3, ou à une variation de puissance du type de celle représentée à la figure 4, si la puissance résiduelle après l'amplificateur discret n'est pas suffisante pour le pompage de l'amplificateur distribué dans la direction de propagation.

La figure 7 montre une vue avec plus de détail du multiplexeur de la figure 6. En fait, le multiplexeur 32 de la figure 6 est formé de deux multiplexeurs 46 et 48, l'un couplant dans la fibre de ligne dans la direction opposée à la direction de propagation les signaux provenant d'un des brins du coupleur 44, et l'autre couplant dans la fibre de ligne, dans la direction de propagation les signaux provenant de l'autre brin du coupleur. Les multiplexeurs 46 et 48 sont par exemple du type des multiplexeurs 14 et 18 de la figure 2.

On a représenté à la figure 6 le cas d'un pompage distribué dans la direction opposée à la direction de propagation, et d'un pompage discret dans direction de propagation. On pourrait obtenir une configuration inverse, dans un montage similaire à celui de la figure 6, obtenu simplement en disposant simplement le multiplexeur 32 entre l'amplificateur discret 34 et l'isolateur 36. Dans ce cas, l'amplificateur discret est pompé par le signal de pompe se propageant dans la direction opposée à la direction de propagation des signaux, tandis que l'amplificateur discret est pompée par le signal de pompe se propageant dans la direction de propagation des signaux. On obtient dans ce cas une variation de puissance du type de celle représentée à la figure 5.

La figure 8 montre encore un schéma de répéteur selon l'invention. Le répéteur de la figure 8 est identique à celui de la figure 6, à cela près qu'il comprend une deuxième série de moyens de pompage, identiques à ceux de la figure 6, et disposés entre l'amplificateur discret et l'isolateur. On référence la deuxième série de moyens de pompage avec les références de la figure 6, mais augmentées d'une unité. Les moyens de contrôle commandent les gains des pompes 40, 42, 41 et 43, et/ou les coefficients de couplage des coupleurs 44 et 45. Dans le cas de la figure 8, on assure un pompage de l'amplificateur discret par des signaux de pompage dans les deux sens de propagation, provenant des multiplexeurs 32 et 33; on assure en outre un pompage dans la fibre de ligne entre les répéteurs, dans les deux directions. A titre d'exemple, la fibre de ligne 6ᵢ₋₁ est pompée dans la direction opposée à la propagation du signal, par le signal provenant du multiplexeur 32 du répéteur 5ᵢ; la même fibre de ligne est pompé dans la direction de propagation du signal par le signal de pompe provenant du multiplexeur 33 du répéteur 5ᵢ₋₁.

Le fonctionnement du montage de la figure 8 est analogue à celui des montages des figures précédentes. On comprend de nouveau que l'on peut jouer sur les puissances respectives du pompage distribué dans la direction de propagation ou dans la direction opposée à la direction de propagation, ou encore sur la puissance du pompage discret.

On pourrait, dans le montage de la figure 8, faire en sorte que les signaux fournis par les deux brins du coupleur 44 soit couplés dans la fibre dans la direction de propagation du signal, par les multiplexeurs 32 et 33; inversement, les signaux fournis par les deux brins du coupleur 45 seraient couplés dans la fibre dans la direction opposée à la direction de propagation du signal, par les multiplexeurs 32 et 33. Le montage ainsi modifié permettrait de disposer d'une source redondante 40, 42 dans une direction de propagation et d'une source redondante 41, 43 distincte dans l'autre direction de propagation.

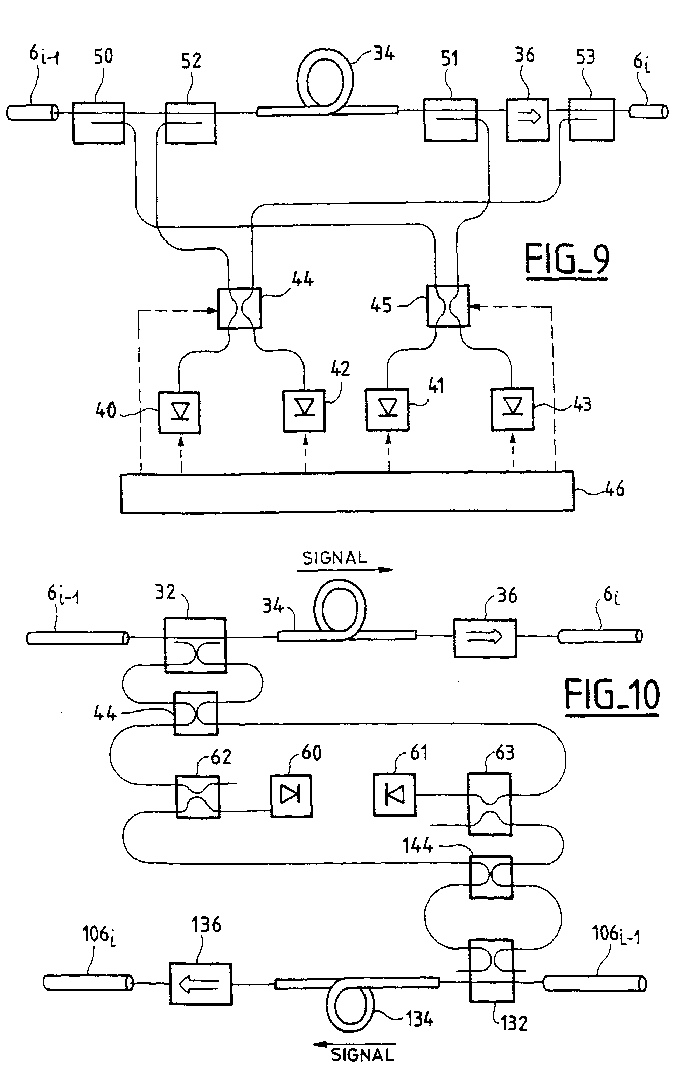

La figure 9 montre encore un exemple de répéteur selon l'invention. Le répéteur de la figure 9 est semblable à celui de la figure 6; toutefois, il présente deux multiplexeurs 50 et 52 entre le coupleur 30 et l'amplificateur discret 34, un multiplexeur 51 entre l'amplificateur 34 et l'isolateur 36, et un multiplexeur 53 entre l'isolateur 36 et le coupleur 38. Le répéteur présente des pompes analogues à celles de la figure 8; les pompes sont regroupées en deux groupes comme sur la figure 8; dans le montage de la figure 9, les signaux issus du coupleur 44 sont utilisés pour le pompage dans la direction de propagation, à l'aide des multiplexeurs 52 et 53. Les signaux issus du coupleur 45 sont utilisés pour le pompage dans la direction opposée à la direction de propagation, à l'aide des multiplexeurs 50 et 51. De la sorte, on peut facilement contrôler la puissance de pompe dans une direction et dans l'autre; en outre les signaux de pompage distribué dans le sens de propagation n'ont pas besoin de traverser l'isolateur. Le montage est un montage à amplification distribuée, à pompage dans la direction de propagation des signaux (multiplexeur 53) et dans la direction opposée à la propagation des signaux (multiplexeur 50); de même l'amplificateur discret est aussi pompé dans la direction de propagation (multiplexeur 52) comme dans la direction opposée à la direction de propagation des signaux (multiplexeur 51). Dans cette configuration, on utilise des multiplexeurs à trois ports. En utilisant des multiplexeurs à quatre ports, on peut réduire à deux le nombre de multiplexeurs, ou encore, en utilisant un multiplexeurs à quatre ports et deux multiplexeurs à trois ports, on peut obtenir un montage à trois multiplexeurs; un tel montage, avec des multiplexeurs de part de d'autre de l'isolateur, permet d'éviter que des signaux de pompe ne traversent l'isolateur. Comme expliqué en référence aux figures précédente, le montage de la figure 9 peut être adapté pour ne prévoir une amplification distribuée que dans une direction.

La figure 10 montre un répéteur particulièrement adapté à une liaison bidirectionnelle. Le répéteur de la figure 10 présente en effet des moyens de pompage qui sont communs pour les deux directions de propagation, ce qui assure une redondance élevée et limite le nombre de pompes. Le répéteur de la figure 10 est en fait formé de deux répéteurs du type représenté à la figure 6, qui sont chacun montés sur une liaison. Les références au deuxième montage utilisé sur la liaison descendante sont augmentées de 100 par rapport à celles des éléments équivalents du premier montage utilisé sur la liaison montante. Comme dans le montage de la figure 6, le multiplexeur 32 ou 132 reçoit les signaux d'un coupleur 44 ou 144. Le répéteur comprend un première pompe 60, dont le signal de sortie est fourni à un coupleur 62; les signaux fournis par le coupleur 62 alimentent les coupleurs 44 et 144. Le répéteur comprend aussi une deuxième pompe 61, dont le signal de sortie est fourni à un coupleur 63; les signaux fournis par le coupleur 62 alimentent les coupleurs 44 et 144. On remarque que les coupleurs 62 et 63 présente dans le montage un coefficient de couplage identique, et sont montés dans des sens inverses, de sorte que pour des puissances de pompe identiques, une même puissance de pompage est envoyée vers chacune des liaisons.

Sur la figure 10 ne sont pas représentés les moyens de contrôle ni les coupleurs permettant de mesure la puissance des signaux en entrée et en sortie du répéteurs, sur chaque liaison. Il est clair que la puissance sur chaque liaison, dans chaque direction de propagation, peut être adaptée, soit en faisant varier une ou plusieurs des facteurs suivants: puissance des pompes, et/ou coefficients de couplage d'un ou plusieurs des coupleurs.

Le montage de la figure 10 permet d'utiliser des moyens de pompage redondants et communs aux deux liaisons. Sur chaque liaison, il assure un pompage des amplificateurs distribués dans la direction opposée à la direction de propagation, et un pompage des amplificateurs discrets dans la direction de propagation des signaux. La partie résiduelle des signaux de pompe de l'amplificateur discret, si elle existe, sert aussi au pompage de l'amplificateur distribué, dans le sens de propagation des signaux.

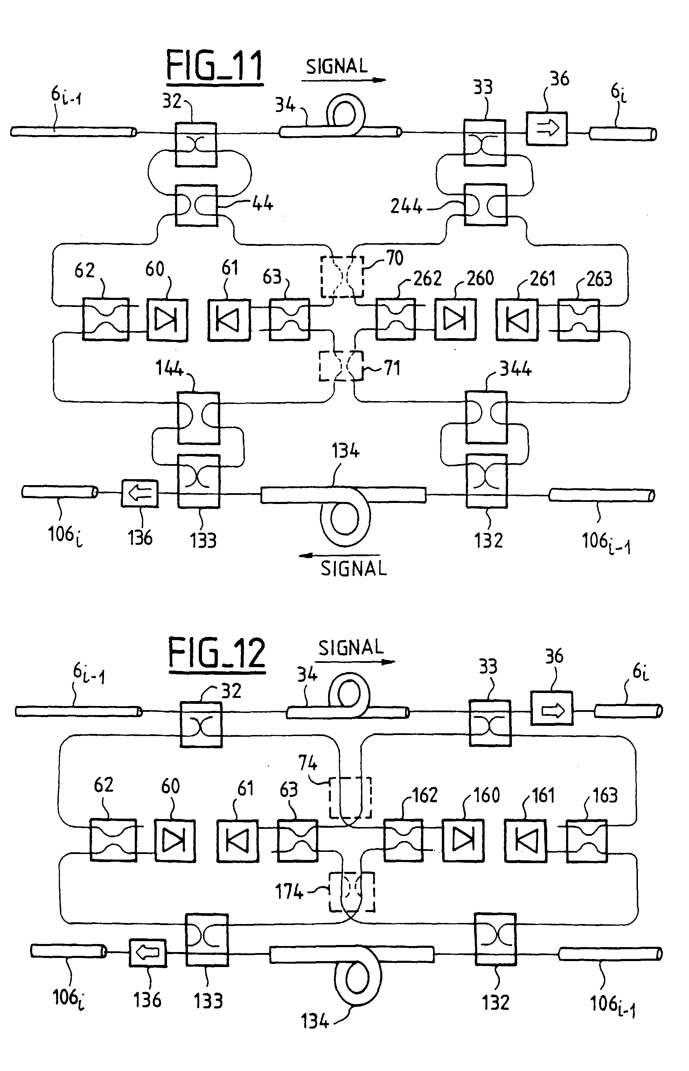

Un montage du même genre peut être obtenu à partir des montages des figures 8 et 9, comme cela apparaît dans la suite pour ce qui est de la figure 8. La figure 11 montre un autre répéteur particulièrement adapté à une liaison bidirectionnelle. Le répéteur de la figure 11 présente aussi des moyens de pompage communs aux deux directions de propagation des signaux. Il est dérivé du montage de la figure 8: dans chaque direction de propagation des signaux, le répéteur de la figure 11 comprend des amplificateurs discret et distribués et des multiplexeurs du type de ceux de la figure 8; on utilise encore les références de la figure 8, en les augmentant de 100 pour la liaison descendante, par rapport aux références utilisées pour la liaison montante. Le dispositif de la figure 11 comprend pour les multiplexeurs 32 et 133 - en amont de l'amplificateur discret 34 sur la liaison montante et en aval de l'amplificateur discret 134 sur la liaison descendante - un premier ensemble de pompes et de coupleurs identique à celui de la figure 10. Il comprend un deuxième ensemble identique pour les multiplexeurs 33 et 132 - en aval de l'amplificateur discret 34 sur la liaison montante et en amont de l'amplificateur discret 134 sur la liaison descendante. Par rapport aux références numériques employées dans la figure 10, les références numériques de ce deuxième ensemble sont obtenues par ajout de 200.

On a représenté en trait pointillés sur la figure 11 la possibilité optionnelle d'un ou de deux coupleurs supplémentaires. Le coupleur 70 est disposé sur les fibres reliant d'une part les coupleurs 63 et 44, et d'autre part les coupleurs 262 et 244. Le coupleur 71 est disposé sur les fibres reliant d'une part les coupleurs 63 et 144, et d'autre part les coupleurs 262 et 344. L'un ou l'autre de ces coupleurs permettent d'augmenter la redondance du répéteur.

Les moyens de contrôle ne sont pas représentés; ils permettent le cas échéant de commander la puissance de pompage discret ou distribué dans chaque direction de propagation des signaux, en jouant sur les puissances relatives des pompes et/ou sur les coefficients de couplage des différents coupleurs.

La figure 12 montre encore un autre type de répéteur pour une liaison bidirectionnelle. Le montage de la figure 12 montre comment on peut affecter les différentes pompes pour le pompage dans une direction ou dans une autre, avec un branchement approprié des coupleurs. Le montage de la figure 12 est identique à celui de la figure 11 en ce qui concerne les amplificateurs et les multiplexeurs. Il diffère du montage de la figure 11 en ce qu'il ne présente pas les coupleurs 44, 144, 244 et 344. Le branchement est le suivant:
- une sortie du coupleur 62 est reliée directement au multiplexeur 32 pour le pompage de l'amplificateur discret 34 dans la direction de propagation des signaux;
- l'autre sortie du coupleur 62 est reliée directement au multiplexeur 133 pour le pompage de l'amplificateur discret 134 dans la direction opposée à la direction de propagation des signaux;
- une sortie du coupleur 63 est reliée directement au multiplexeur 33 pour le pompage de l'amplificateur distribué 6ᵢ dans la direction de propagation des signaux;
- l'autre sortie du coupleur 63 est reliée directement au multiplexeur 132 pour le pompage de l'amplificateur distribué 106ᵢ₋₁ dans la direction opposée à la direction de propagation des signaux;
- une sortie du coupleur 162 est reliée directement au multiplexeur 32 pour le pompage de l'amplificateur distribué 6ᵢ₋₁ dans la direction opposée à la direction de propagation des signaux;
- l'autre sortie du coupleur 162 est reliée directement au multiplexeur 133 pour le pompage de l'amplificateur distribué 106ᵢ dans la direction propagation des signaux;
- une sortie du coupleur 163 est reliée directement au multiplexeur 33 pour le pompage de l'amplificateur discret 34 dans la direction opposée à la direction de propagation des signaux;
- l'autre sortie du coupleur 163 est reliée directement au multiplexeur 150 pour le pompage de l'amplificateur discret 134 dans la direction de propagation des signaux.

Dans un tel montage, les pompes 60 et 61 assurent le pompage dans la direction de propagation des signaux sur la liaison montante, et dans la direction opposée à la direction de propagation des signaux sur la liaison descendante. Inversement, les pompes 62 et 63 assurent le pompage dans la direction opposée à la direction de propagation des signaux sur la liaison montante, et dans la direction de propagation des signaux sur la liaison descendante.

On peut encore prévoir, de façon similaire à ce qui est décrit à la figure 11, un ou plusieurs coupleurs supplémentaires, entre les pompes des directions opposées sur chaque liaison, de sorte à augmenter la redondance. Deux coupleurs 74 et 174 de ce genre sont représenté sur la figure 12:
- le coupleur 74 couple la fibre reliant le coupleur 63 au multiplexeur 33, d'une part, et la fibre reliant le coupleur 162 au multiplexeur 32, d'autre part;
- le coupleur 174 couple la fibre reliant le coupleur 63 au multiplexeur 132, d'une part, et la fibre reliant le coupleur 162 au multiplexeur 133, d'autre part.

Dans ce cas, on a une redondance aussi entre les pompes des amplificateurs distribués dans les deux directions de propagation, sur les deux liaisons.

On pourrait encore prévoir des coupleurs entre les pompes des amplificateurs discrets 34 ou 134, sur l'une ou l'autre des liaisons. Sur la liaison montante, un tel coupleur couplerait la fibre reliant le coupleur 62 au multiplexeur 32, d'une part, et la fibre reliant le coupleur 163 au multiplexeur 33, d'autre part. Sur la liaison descendante, le coupleur couplerait la fibre reliant le coupleur 62 au multiplexeur 133, d'une part, et la fibre reliant le coupleur 163 au multiplexeur 132, d'autre part.

En prévoyant tous ces coupleurs, ou seulement une partie d'une eux, on peut assurer une redondance non seulement entre la liaison montante et la liaison descendante, mais encore sur une même liaison, entre les pompes d'un même type d'amplificateur dans les deux directions.

Le système de transmission de la figure 1 peut présenter avantageusement un ensemble de répéteurs identiques, par exemple du type décrit à la figure 2, 6, 8 ou 9, ou encore du type des figures 10, 11 ou 12 dans le cas d'une liaison bidirectionnelle. Toutefois, il est aussi possible de prévoir des répéteurs différents, et d'obtenir des profils de puissance entre les différents répéteurs du type de ceux des figures 3, 4 ou 5; il est aussi possible 'de ne prévoir une combinaison d'amplification distribuée et d'amplification discrète que sur certains tronçons, les autres tronçons mettant alors en oeuvre des solutions connues, purement distribuées, ou purement discrètes.

Bien évidemment, l'invention n'est pas limitée aux modes de réalisation décrits à titre d'exemple. Le schéma d'allocation de longueurs d'onde n'est aucunement limité aux exemples décrits. Il faut aussi noter que l'on peut, par rapport aux modes de réalisation décrits, ajouter ou enlever des filtres ou des isolateurs, en fonction des besoins. Il convient aussi de noter que le type de moyens de pompage utilisés peut être adapté aux besoins, et que les différents moyens de pompage décrits dans les différentes figures peuvent si nécessaires être échangés; chaque moyen de pompage présentant ses caractéristiques et avantages propres. On choisit en fonction de la redondance nécessaire les moyens de couplage, et le nombre de pompes.

Enfin, les exemples préférés de l'invention sont décrits dans le cas d'un système en multiplex; elle s'applique aussi à un système monocanal.

## Revendications

1. Système de transmission à fibre optique et à signaux solitons, comprenant une pluralité de sections de fibre (6ᵢ) et de répéteurs (5ᵢ), caractérisé en ce qu'au moins une section de fibre comprend des moyens d'amplification distribuée (6i, 14, 18, 24, 26, 28), et au moins un répéteur comprend des moyens d'amplification discrète (16).

2. Système de transmission selon la revendication 1, caractérisé en ce qu'il est un système de transmission à multiplexage de longueurs d'onde

3. Système de transmission selon la revendication 1 ou 2, caractérisé en ce que ladite section de fibre est adjacente au dit répéteur.

4. Système de transmission selon la revendication 1, 2 ou 3, caractérisé en ce que les moyens d'amplification distribuée comprennent une fibre de ligne (6ᵢ, 14, 18, 24, 26, 28) faiblement dopée à l'erbium et des moyens (14, 18, 24, 26, 28) de pompage de cette fibre.

5. Système de transmission selon la revendication 1, 2 ou 3, caractérisé en ce que les moyens d'amplification comprennent des moyens de pompage par effet Raman stimulé de la fibre de ligne.

6. Système de transmission selon l'une des revendications 1 à 5, caractérisé en ce que les moyens d'amplification discrète comprennent un amplificateur à fibre fortement dopée à l'erbium, et des moyens de pompage de cette fibre.

7. Système de transmission selon l'une des revendications 4 à 6, caractérisé en ce que les moyens de pompage (24, 26, 28) sont redondants.

8. Système de transmission selon l'une des revendications 4 à 7, caractérisé en ce les moyens de pompage pour les moyens d'amplification discrète et les moyens de pompage pour l'amplification distribuée sont communs.

9. Système de transmission selon l'une des revendications 1 à 8, caractérisé par des moyens (22) de contrôle automatique du gain des moyens d'amplification discrète (16).

10. Système de transmission selon la revendication 9, caractérisé par des moyens (22) de contrôle commandent le gain des moyens d'amplification discrète (16) en fonction de la puissance des signaux émis et reçus par le répéteur.

11. Système de transmission selon l'une des revendications 1 à 8, caractérisé par des moyens (22) de contrôle automatique du gain relatif des moyens d'amplification discrète (16) et des moyens d'amplification discrète.

12. Procédé de transmission de signaux solitons, comprenant :
- au moins une étape d'amplification discrète des signaux, et
- au moins une étape d'amplification distribuée des signaux.

13. Procédé selon la revendication 12, caractérisé en ce que les signaux solitons sont multiplexés en longueurs d'onde

14. Procédé selon la revendication 12 ou 13, caractérisé en ce que l'étape d'amplification discrète comprend le contrôle automatique du gain d'amplification discrète.

15. Procédé selon la revendication 12 ou 13, caractérisé en ce qu'il comprend une étape de contrôle de gain relatif de l'amplification discrète et de l'amplification distribuée.

16. Application du procédé selon la revendication 13, 14 ou 15 à la réduction de la gigue de collision.

17. Un répéteur (5ᵢ) pour un système de transmission à fibre optique et à signaux solitons, comprenant des moyens d'amplification discrète (16) des signaux et des moyens de pompage (14, 18, 24, 26, 28) pour une amplification distribuée.

18. Répéteur selon la revendication 17, caractérisé en ce que le système de transmission est un système de transmission à multiplexage de longueurs d'onde

19. Répéteur selon la revendication 17 ou 18, caractérisé en ce que les moyens de pompage comprennent au moins une pompe pour fibre faiblement dopée à l'erbium.

20. Répéteur selon la revendication 17 ou 18, caractérisé en ce que les moyens de pompage comprennent au moins une pompe pour pompage par effet Raman stimulé d'une la fibre de ligne.

21. Répéteur selon l'une des revendication 17 à 20, caractérisé en ce que les moyens d'amplification discrète comprennent un amplificateur à fibre fortement dopée à l'erbium, et des moyens de pompage de cette fibre.

22. Répéteur selon l'une des revendications 17 à 21, caractérisé en ce que les moyens de pompage (24, 26, 28) sont redondants.

23. Répéteur selon la revendication 21 ou 22, caractérisé en ce les moyens de pompage pour les moyens d'amplification discrète et les moyens de pompage pour l'amplification distribuée sont communs.
